# EUROPEAN PATENT APPLICATION

(11) **EP 2 887 631 A1**
(43) Date of publication of application: **24.06.2015**
(21) Application number: 14195961.9
(22) Date of filing: 02.12.2014
(51) Int. Cl.: H04N 1/00

(54) **User interface device, user interface system, and printing device**

(30) Priority: 17.12.2013 JP 2013260316
(71) Applicant: Funai Electric Co., Ltd., Daito city Osaka 574-0013 (JP)
(72) Inventor: Sakai, Hiroki, Osaka, Osaka 574-0013 (JP)
(74) Representative: Osha Liang

(57) **Abstract**

A user interface device (12) for receiving a user instruction includes a receiver (14) configured to receive a signal by wireless communication from a mobile device (20), one or more detectors (15, 16) disposed in predetermined positions with respect to the receiver (14) and configured to detect one or more strengths of the signal, and a controller (17) configured to acquire a strength of the signal received by the receiver (14) and at least one of the strengths of the signal detected by the one or more detectors (15, 16), and to identify, as the user instruction, an instruction associated with a difference between the acquired strengths of the signal.

## Description

### [Technical Field]

The present invention relates generally to a user interface device, a user interface system, and a printing device.

### [Background Art]

Printing devices that can acquire data wirelessly and print an object such as an image retained by a mobile device such as a smart phone or a digital camera are widespread.

When such printing devices accept a print request from the mobile device by wireless communication such as near field communication (NFC), for example, the print request may be handed over to high-speed communication such as Bluetooth (registered trademark), for example; data may be received from the mobile device by the high-speed communication; and a printed material represented by the data may be printed. By this, a user interface that is quick and convenient may be realized, such as one where an image is printed when a user specifies a desired image with the mobile device and holds the mobile device over the printing device.

To maintain such convenience, known printing devices that can select whether to perform printing or not perform a setting relating to printing without a particular operation such as a key operation or a button operation (see, for example, Patent Document 1).

The printing device of Patent Document 1 displays a menu for detailed settings relating to printing only when an established state of wireless communication continues for a predetermined time since being established. By this, a user attempting to perform the detailed settings relating to printing can cause the menu to be displayed without a particular operation, just by holding a mobile device near the printing device for the predetermined time or longer.

### [Related Art Documents]

### [Patent Documents]

[Patent Document 1] Japanese Unexamined Patent Application Publication No. 2013-184296

However, in conventional printing devices, the detailed settings are performed, for example, by displaying the menu on the mobile device and operating the mobile device. Because of this, a user performing the detailed settings has to perform operations that are as cumbersome as a key operation, a button operation, or the like, such as an operation of indicating a setting content by tapping a screen of the mobile device or an operation of moving the mobile device from one hand to the other for tapping. In this manner, in the conventional printing devices, the convenience of a user who performs the detailed settings may be impaired, and there is still room for improvement in the convenience of the user who performs the detailed settings.

### [Summary of the Invention]

One or more embodiments of the invention improve the convenience of a user interface using wireless communication.

A user interface device for receiving a user instruction, according to one or more embodiments of one aspect of the present invention, comprises a receiver configured to receive a signal by wireless communication from a mobile device; one or more detectors disposed in predetermined positions with respect to the receiver and configured to detect one or more strengths of the signal; and a controller configured to acquire a strength of the signal received by the receiver and at least one of the strengths of the signal detected by the one or more detectors, and to identify, as the user instruction, an instruction that is associated with a difference between the acquired strengths of the signal. According to one or more embodiments, the acquired strengths of the signal may be at least two. However, when the user interface device comprises more than two detectors, then the acquired strengths of the signal may be more than two.
When the user interface device comprises a plurality of detectors or more, according to one or more embodiments, the receiver may be for example interposed between two detectors.

According to one or more embodiments of this aspect, the user can impart a desired instruction to the user interface device by disposing the mobile device in an instruction position at which a characteristic difference arises between the strengths of the at least two signals, that is, by merely changing the position at which the mobile device is held. Because there is no need for the user to tap a screen of the mobile device or move the mobile device from one hand to the other for tapping, the operation of acquiring the instruction of the user using wireless communication is more convenient than in conventional user interface devices.

Furthermore, such an effect can be obtained if the mobile device has a function of wireless communication. Because of this, the user interface device also excels in being able to cooperate with many mobile devices, including low-cost or old mobile devices that do not have a position detection function obtainable by an angular velocity sensor or an acceleration sensor.

Furthermore, according to one or more embodiments, once a connection of the wireless communication is established, the controller may be configured to identify the instruction by acquiring the strengths of the signal after a predetermined period of time, that may be for example commensurate with an operation where a user holds the mobile device in a fixed position.

According to one or more embodiments, for example, an erroneous operation that may occur when the mobile device happens to pass over the instruction position while the user holds the mobile device over the receiver is prevented.

Furthermore, according to one or more embodiments, once a connection of the wireless communication is established, the controller may be configured to identify the instruction by acquiring the strengths of the signal after a predetermined time period during which each of the strengths of the signal is greater than a first threshold and the difference between the strengths of the signal is equal to or less than a second threshold. According to one or more embodiments, each of the strengths of the signal is greater than a first threshold and the difference between the strengths of the signal is equal to or less than a second threshold when the mobile device is held in a fixed position.

According to one or more embodiments, because the instruction of the user associated with the difference between the acquired strengths of the signal may be identified after confirming that the mobile device is stably held over the receiver by the user, an erroneous operation that may occur when the mobile device happens to pass over the instruction position while the user holds the mobile device over the receiver, for example, is more effectively prevented.

Furthermore, according to one or more embodiment, the controller may be configured to identify the instruction when the difference between the strengths of the signal is greater than a third threshold.

According to one or more embodiments, because the instruction of the user can be identified when the mobile device is clearly disposed in the instruction position, an erroneous operation deriving from an unintentional user instruction due to a slight shaking of a hand of the user is prevented.

Furthermore, according to one or more embodiments, the controller may be configured to store the third threshold corresponding to each of a plurality of identification information, acquire identification information of the mobile device by the wireless communication, and identify the instruction when the difference between the strengths of the signals that are at least two in number is greater than the third threshold corresponding to the acquired identification information of the mobile device.

According to one or more embodiments, by using the third threshold associated with the identification information of the mobile device, an erroneous operation is more effectively prevented.

Furthermore, according to one or more embodiments, the controller may be configured to record a maximum value of the difference between the strengths of the signal from when the connection of the wireless communication is established until the connection is disconnected, calculate a new third threshold from the retained maximum value, and associate and store the identification information of the mobile device acquired by the wireless communication with the new third threshold.

According to one or more embodiments, a suitable third threshold can be newly retained for each mobile device.

Furthermore, according to one or more embodiments, the user interface device may further comprise a display. For example, the controller may be configured to display on the display a plurality of instruction positions at which a characteristic difference arises for each of the strengths of the signal acquired when the mobile device is disposed and instructions associated with the characteristic differences at each of the instruction positions.

According to one or more embodiments, an operation guide can be presented to the user.

Furthermore, according to one or more embodiments, the receiver may be interposed between two of the detectors. According to one or more embodiments, when the receiver is interposed between two of the detectors, the controller may be configured to acquire the strengths of the signal detected by the two detectors and identify the instruction associated with the difference between the acquired two strengths of the signal.

According to one or more embodiments, the instruction of the user can be identified by using the difference between the strengths of the signal detected by the two detectors.

Furthermore, according to one or more embodiments, at least one of the detectors may comprise a coil. According to one or more embodiments, each detector may comprise a coil.

According to one or more embodiments, the instruction of the user can be identified by using a coil as a detector.

Furthermore, according to one or more embodiments, the user interface device may be configured to be incorporated in a device performing processes involving options. In the following, such a device will be referred to as application device. According to one or more embodiments, when the user interface device has this exemplary configuration, the instruction may be for selecting one of the options, and the controller may be configured to start a process in the application device performing processes involving options after the connection of the wireless communication is established, identify the instruction by acquiring the strengths of the signal, and execute the process according to the selected option corresponding to the identified instruction.

According to one or more embodiments, the user can select the options of the processes in the application device by using the user interface device.

Furthermore, according to one or more embodiments of a second aspect of the invention, a user interface system comprises a mobile device and a user interface device as defined in any of the above-mentioned embodiments. For example, the user interface device comprises a receiver configured to receive a signal by wireless communication from the mobile device; one or more detectors disposed in predetermined positions with respect to the receiver and configured to detect one or more strengths of the signal; and a controller configured to acquire at least two strengths of the signal from among a strength of the signal received by the receiver and the strengths of the signal detected by the detectors and to identify, as instruction of a user, an instruction that is associated with a difference between the acquired strengths of the signal. According to one or more embodiments, the receiver of the user interface device may be provided on an installation surface inclined relative to a horizontal surface. The mobile device may comprise a display; an inclination sensor configured to detect a direction of an incline of the mobile device; and a controller configured to display on the display an image representing a plurality of instruction positions at which a characteristic difference arises for each of the strengths of the signal acquired by the user interface device when the mobile device is disposed on the installation surface and instructions associated with the characteristic differences at each instruction position. The controller may be configured to display the image in an orientation at which a direction of an incline of the installation surface represented in the image and a direction of an incline detected by the inclination sensor match.

According to one or more embodiments, because a disposition of the instruction position represented by the image and a disposition of the actual instruction position match, an erroneous operation deriving from an unintentional instruction can be prevented even if the user disposes the mobile device in the instruction position represented by the image.

In addition, according to another aspect of the invention, a method for receiving a user instruction with a user interface device may comprise receiving a signal by wireless communication from a mobile device; detecting one or more strengths of the signal; acquiring a strength of the received signal and at least one of the detected strengths of the signal; and identifying, as the user instruction, an instruction that is associated with a difference between the acquired strengths of the signal.

According to one or more embodiments, the method may comprise, once a connection of the wireless communication is established, identifying the instruction by acquiring the strengths of the signal after a predetermined period of time, for example after a predetermined period of time that the mobile device is held in a fixed position.

According to one or more embodiments, the method may comprise, once a connection of the wireless communication is established, identifying the instruction by further acquiring the strengths of the signal after a predetermined time period during which each of the strengths of the signal is greater than a first threshold and the difference between the strengths of the signal is equal to or less than a second threshold, e.g., after the mobile device is held in a fixed position for a predetermined period of time.

According to one or more embodiments, the method may comprise identifying the instruction when the difference between the strengths of the signal is greater than a third threshold.

According to one or more embodiments, the method may comprise storing the third threshold corresponding to each of a plurality of identification information; acquiring identification information of the mobile device by the wireless communication; and identifying the instruction when the difference between the strengths of the signal is greater than the third threshold corresponding to the acquired identification information of the mobile device.

According to one or more embodiments, the method may comprise recording a maximum value of the difference between the strengths of the signal from when the connection of the wireless communication is established until the connection is disconnected, calculating a new third threshold from the recorded maximum value, and associating and storing the identification information of the mobile device acquired by the wireless communication with the new third threshold.

According to one or more embodiments, the method may comprise displaying on a display of the user interface device a plurality of instruction positions at which a characteristic difference arises for each of the strengths of the signal acquired when the mobile device is disposed; and instructions associated with the characteristic differences at each of the instruction positions.

According to one or more embodiments, the user interface device may comprise a receiver configured to receive the signal from the mobile device and one or more detectors configured to detect the one or more strengths of the signal and disposed in opposite positions with respect to the receiver, the method further comprising acquiring the strengths of the signal detected by the one or more detectors and identifying the instruction associated with the difference between the acquired two strengths of the signal.

Furthermore, according to another aspect of the present invention, a printing device may comprise a user interface device as defined in any of the above-mentioned embodiments. According to one or more embodiments, the controller may be configured to start a printing process in the printing device after the connection of the wireless communication is established and afterward identify instructions relating to continuing and stopping printing by acquiring the strengths of the signal and continue or stop printing according to the identified instruction.

According to one or more embodiments of the present invention, the convenience of the user interface that acquires the instruction of the user using wireless communication can be improved.

### [Brief Description of the Drawings]

FIG. 1 is a perspective view illustrating an example of a printing device comprising a user interface device according to one or more embodiments of the present invention.
FIG. 2A is a side view illustrating an example of a user interface device according to one or more embodiments of the present invention.
FIG. 2B is a top view illustrating the user interface device of Fig. 2A.
FIG. 3A is a diagram illustrating an example of a magnetic field formed by wireless communication.
FIG. 3B is a diagram illustrating an example of a magnetic field formed by wireless communication.
FIG. 3C is a diagram illustrating an example of a magnetic field formed by wireless communication.
FIG. 4 is a diagram illustrating examples of strengths of signals detected by the user interface device according to one or more embodiments of the present invention.
FIG. 5 is a flowchart illustrating an example of an operation of a user interface device according to one or more embodiments of the present invention.
FIG. 6 is a diagram illustrating an example of a screen displayed on a user interface device according to one or more embodiments of the present invention.
FIG. 7 is a diagram illustrating an example of a screen displayed on a mobile device according to one or more embodiments of the present invention.
FIG. 8 is a diagram describing an operation of a user interface device according to one or more embodiments of the present invention.
FIG. 9 is a diagram illustrating an example of a third threshold retained by a user interface device according to one or more embodiments of the present invention.
FIG. 10 is a flowchart illustrating an example of an operation of a user interface device according to one or more embodiments of the present invention.
FIG. 11 is a diagram illustrating an example of a disposition of a user interface device and a mobile terminal in a user interface system according to one or more embodiments of the present invention.
FIG. 12 is a diagram illustrating an example of a screen displayed on a mobile device according to one or more embodiments of the present invention.

### [Detailed Description of Embodiments]

Embodiments of the present invention will be described in detail below with reference to the drawings. Each embodiment that will be described below illustrates an example of the present invention and is provided for mere illustrative purposes. However, these embodiments can be combined with each other and are not intended to be limited to the specific combinations of features disclosed herein. Also, numerical values, shapes, materials, components, disposition positions and connection modes of the components, steps, orders of the steps, and the like that will be illustrated in the embodiments below are examples and are not intended to limit the present invention.

### Example of a user interface device

A user interface device according to one or more embodiments is a user interface device that may acquire instructions sent by a mobile device by wireless communication. Such a user interface device may be incorporated, for example, in a printing device. In this case, the user interface device may exchange various information with a user for printing.

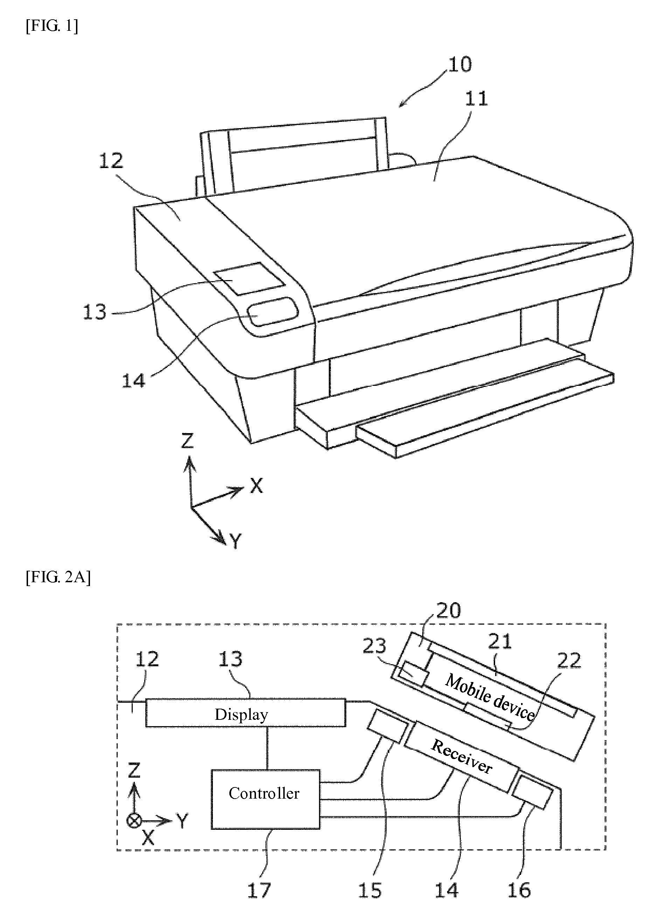

FIG. 1 is a perspective view illustrating an example of a printing device 10 comprising a user interface device 12 according to one or more embodiments.

The printing device 10 illustrated in FIG. 1 comprises a printing unit 11 for performing printing and the user interface device 12. The user interface device 12 may comprise a display 13 and a receiver 14. According to one or more embodiments, the display 13 and the receiver 14 are arranged in a position accessible to a user, who is in a +y direction relative to the printing device 10.

FIG. 2A is a side view schematically illustrating a configuration of the user interface device 12 viewed in a +x direction according to one or more embodiments.

In FIG. 2A, along with the user interface device 12, a mobile device 20 intended to communicate with the user interface device 12 by wireless communication is also illustrated. The mobile device 20 can be held in a user's hand and moved freely and may be, for example, a mobile information terminal, a digital camera, or the like, or any other device having a wireless communication function.

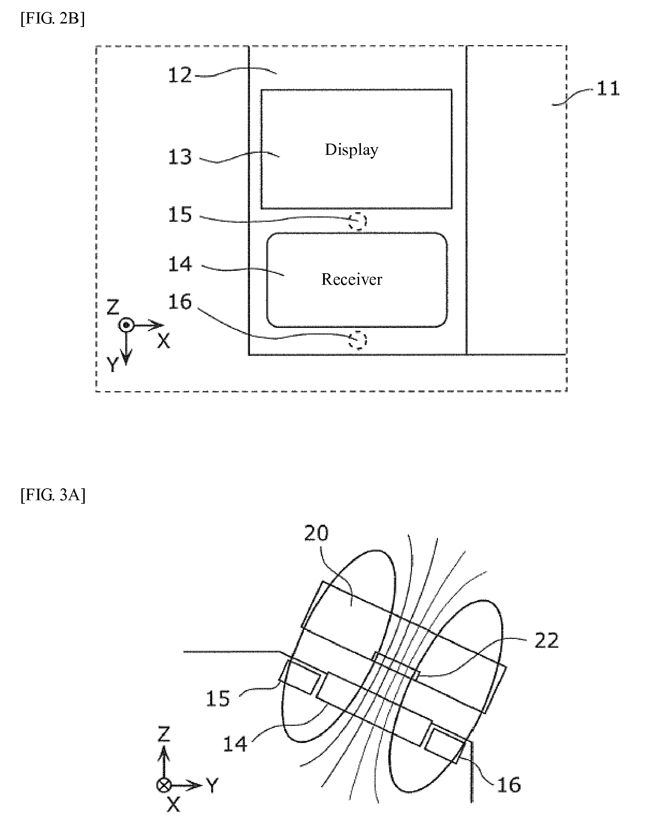

FIG. 2B is a top view schematically illustrating the configuration of the user interface device 12 viewed in a -Z direction according to one or more embodiments.

As illustrated in FIGS. 2A, 2B, the user interface device 12 may comprise, in addition to the display 13 and the receiver 14, also one or more detectors 15, 16 and a controller 17. Moreover, the mobile device 20 may comprise a display 21, a transmitter 22, and a controller 23.

The display 13 of the user interface device 12 may display various information including, for example, a prompt, guidance, and the like when acquiring an instruction from the user. The display 13 may comprise, for example, a liquid crystal display device or an organic electroluminescence (EL) display device.

The receiver 14 receives a signal by wireless communication. The receiver 14 may comprise, for example, an NFC module. For example, the NFC module may comprise an antenna and a circuit for signal processing.

The one or more detectors 15, 16 detect strengths of signals by wireless communication. Each of the detectors 15, 16 comprise, for example, a coil. The detectors 15, 16 may be disposed in positions respectively predetermined with respect to the receiver 14. In the examples of FIGS. 2A, 2B, the detectors 15, 16 are respectively disposed in opposite positions with respect to the receiver 14 in a y-direction. In other words, the receiver 14 is interposed between the detectors 15, 16 in the y-direction.

The controller 17 is configured to control the user interface device 12. The controller 17 may be configured to acquire strengths of at least two signals from among a strength of the signal received by the receiver 14 and the strengths of the signals detected by the detectors 15, 16 and identify the instruction of the user based on a difference between the strengths of the acquired signals.

The controller 17 may comprise, for example, a processor, a memory and a program stored in the memory and executed by the processor.

The display 21 of the mobile device 20 may display various information including, for example, a prompt, guidance, and the like when acquiring the instruction of the user. The display 21 may comprise, for example, a liquid crystal display device or an organic EL display device.

The transmitter 22 may transmit a signal by wireless communication. The transmitter 22 may comprise, for example, an NFC module. For example, the NFC module may comprise an antenna and a circuit for signal processing.

The controller 23 may control the mobile device 20. The controller 23 may comprise a software function or a hardware circuit.

Next, an example of an operation of the user interface device 12 will be described.

FIGS. 3A to 3C are diagrams illustrating an example of a magnetic field formed by the mobile device 20 during wireless communication.

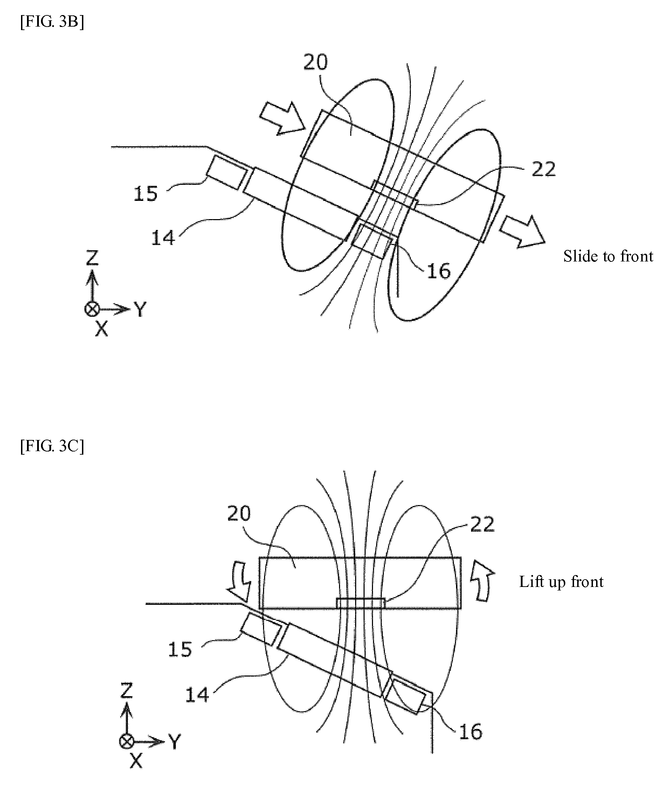

FIG. 3A represents a magnetic field formed when the mobile device 20 is substantially directly above the receiver 14, that is, substantially midway between the detectors 15, 16; FIG. 3B represents a magnetic field formed when the mobile device 20 is slid to the front (+y direction) when viewed from the user; and FIG. 3C represents a magnetic field formed when the mobile device 20 is inclined so that an end portion in the front (+y direction) when viewed from the user is lifted up. In this manner, strengths of the magnetic fields received by the detectors 15, 16—that is, the strengths of the signals detected by the detectors 15, 16—may differ according to positions of the mobile device 20.

Therefore, a characteristic difference between the strengths of the signals detected by the detectors 15, 16 may be associated with the instruction of the user, and the position of the mobile device 20 at which such a characteristic difference between the strengths of the signals arises may be determined as an instruction position. When the user disposes the mobile device 20 in the instruction position, the controller 17 can acquire the strengths of the signals detected by the detectors 15, 16 and identify an instruction associated with the difference between the acquired strengths of the signals as the instruction of the user.

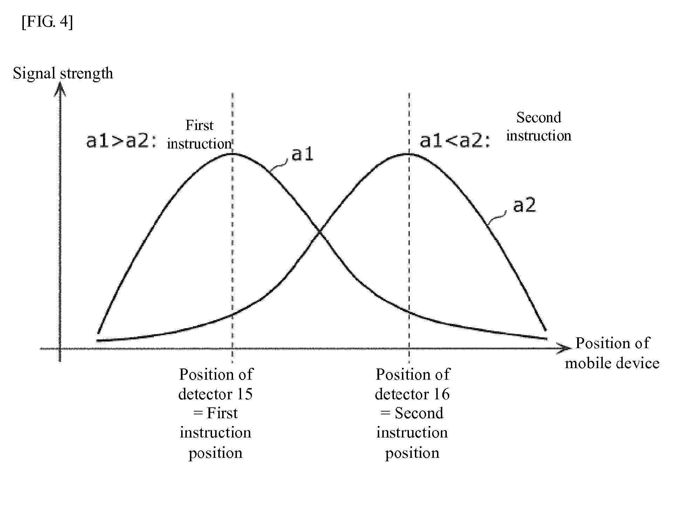

FIG. 4 is a diagram illustrating examples of the strengths of the signals detected by the detectors 15, 16 according to one or more embodiments.

In FIG. 4, as an example, strengths a1, a2 of the signals detected by the detectors 15, 16 according to a position of the mobile device 20 on a line passing over the detectors 15, 16 are illustrated. The right side and the left side of the graph correspond respectively to the front and the rear when viewed from the user.

The strengths a1, a2 of the signals illustrate a maximum value when the mobile device 20 is in the position of the detectors 15, 16, respectively.

For example, the position of the detector 15 may be determined as a first instruction position, and the first instruction position, a difference a1>a2 of the strengths of the signals, and a first instruction may be associated with each other. Moreover, the position of the detector 16 may be determined as a second instruction position, and the second instruction position, a difference a1<a2 of the strengths of the signals, and a second instruction may be associated with each other.

Here, while contents of the first instruction and the second instruction are not limited, these may be for example simple responses of the user represented by yes or no. Moreover, when the user interface device is incorporated in a printing device, the first and second instructions may be instructions for continuing or stopping printing or performing detailed settings such as color or black and white in a printing mode.

By such associations, the user, to perform, for example, the second instruction, slides the mobile device 20 to the front and disposes the mobile device 20 in the second instruction position (FIG. 3B). By this, by the difference between the strengths of the signals becoming a1<a2, the user interface device 12 may identify the second instruction as the instruction of the user.

Furthermore, a position at which the end portion in the front of the mobile device 20 is lifted up may be determined as the second instruction position and associated with the second instruction.

By such an association, the user, to perform, for example, the second instruction, lifts up the end portion in the front of the mobile device 20 and disposes the end portion in the second instruction position (FIG. 3C). By this, by the difference between the strengths of the signals becoming a1<a2, the user interface device 12 may identify the second instruction as the instruction of the user.

Similarly, by sliding the mobile device 20 to the rear or lifting up an end portion in the rear, the user interface device 12 can also identify the first instruction as the instruction of the user.

Next, several exemplary configurations effective in identifying with high precision the instruction of the user will be described.

For example, if the mobile device 20 happens to pass over the instruction position while the user holds the mobile device 20 over the receiver 14, an erroneous operation may occur deriving from an unintentional user instruction. Such an erroneous operation may for example occur when the user holds the mobile device 20 over the receiver 14 while sliding the mobile device 20.

Therefore, the controller 17 may identify the instruction of the user by acquiring the strengths a1, a2 of the signals from the detectors 15, 16 after a predetermined time has elapsed. This predetermined time may be commensurate with an operation where the user holds the mobile device 20 in a fixed position once a connection of wireless communication is established. The time may be for example on the order of 0.1 seconds or 1 second.

According to such a configuration, the erroneous operation that may occur due to the mobile device 20 happening to pass over the instruction position while the user holds the mobile device 20 over the receiver 14 is prevented.

Furthermore, the controller 17 may identify the instruction of the user by further acquiring the strengths a1, a2 of the signals from the detectors 15, 16 after a predetermined time period during which the user holds the mobile device 20 in the fixed position once the connection of wireless communication is established. According to one or more embodiments, while the user holds the mobile device 20 in the fixed position, each strength a1, a2 of the signals detected by the detectors 15, 16 is greater than a first threshold and a size |a1-a2| of the difference between the strengths of the signals is equal to or less than a second threshold have continued.

In such a configuration, a determination using the first threshold confirms that the mobile device 20 is sufficiently near both detectors 15, 16, and a determination using the second threshold confirms that the mobile device 20 is not near only one of the detectors 15, 16. By this, the controller 17 may further identify the instruction of the user associated with the difference between the acquired strengths a1, a2 of the signals after confirming that the mobile device 20 is stably retained between the detectors 15, 16 by the user. As a result, the erroneous operation that may occur due to the mobile device 20 happening to pass over the instruction position while the user holds the mobile device 20 over the receiver 14 is more effectively prevented.

Furthermore, while the user holds the mobile device 20 over the receiver 14, due to a slight shaking of a hand of the user, an erroneous operation where the instruction not intended by the user is identified may occur.

Therefore, the controller 17 may identify the instruction of the user when the size |a1-a2| of the difference between the strengths of the signals is greater than a third threshold.

According to such a configuration, a determination using the third threshold confirms that the mobile device 20 is clearly near the detector 15 or 16, in other words, that the mobile device 20 is clearly disposed in the instruction position. By this, while the user holds the mobile device 20 over the receiver 14, the erroneous operation where the instruction not intended by the user is identified due to the slight shaking of the hand of the user is prevented.

Example of application of the user interface

An example of application of the user interface device described above will be described.

An application device according to one or more embodiments may perform a process involving options or selections for operating the application device when a mobile device is held thereover. In such an application device, a user interface device such as the user interface described above may start a predetermined process involving options for operating the application device after a connection with the mobile device is established by wireless communication and afterward identify an instruction of the user for selecting an option and execute a process by the application device according to the option selected according to the identified instruction.

The application device is not limited in particular but, as an example, may be a printing device. Such a printing device prints an image according to a print request made via wireless communication when the user holds the mobile device that indicates a desired image over the printing device. The printing device 10 according to the embodiments defined above will be described below as an example of such a printing device.

Furthermore, the process involving the options is also not limited in particular but, as an example, may be a printing process in which the user continues to perform a print request of the same image. With such a printing process, because the print request of the user may be erroneous, options of continuing or stopping printing are provided. The processes involving the options may be different processes and the contents of the options may be any contents. Various options are possible, such as selecting color printing or black and white printing in a process that sets in detail a print mode.

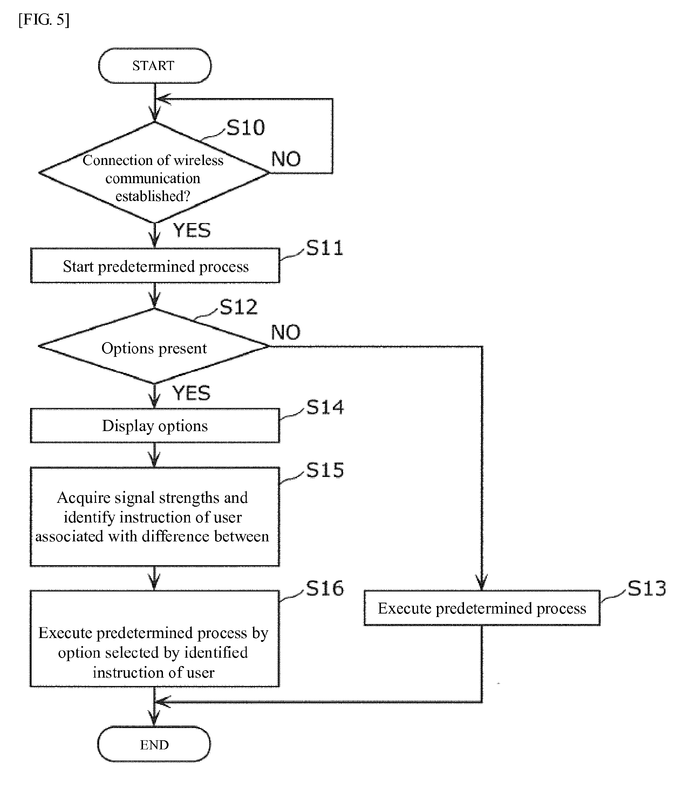

FIG. 5 is a flowchart illustrating an example of the operation of the user interface device 12 in the application device according to one or more embodiments. The operations of each step of the flowchart of FIG. 5 are described in general terms that do not identify the application device. However, for illustrative purposes, the following description will be referred to exemplary operations in the printing device 10.

After the connection of wireless communication is established (YES at S10), the controller 17 may start the predetermined process (S11). With the printing device 10, for example, the printing process of the image for which the print request is made may be started via wireless communication.

The controller 17 may determine according to a predetermined condition whether the started process involves the options (S 12). With the printing device 10, for example, the options may be determined to be present if the image for which the print request is made is the same as the image printed immediately beforehand and not to be present if the images are different.

If it is determined that the options are not present (NO at S12), the controller 17 may immediately execute the predetermined process (S13). With the printing device 10, for example, if an image that differs from the image printed immediately beforehand is print requested, a printing process of the image may be immediately executed. In the printing process of the image, a process that hands over to high-speed communication and a process that receives data representing the image from the mobile device 20 by this high-speed communication can be included.

If it is determined that the options are present (YES at S12), the controller 17 may display an operation guide on the display 13 or the display 21 of the mobile device 20 or both (S14). Here, the operation guide may be an image that represents a plurality of instruction positions at which a characteristic difference arises for each of the strengths of the signals detected by the detectors 15, 16 when the mobile device 20 is disposed and instructions associated with the characteristic differences in each of the instruction positions.

The operation guide displayed on the display 21 of the mobile device 20 may be transmitted to the mobile device 20 from the user interface device 12 via, for example, wireless communication. If there is a sound function in the user interface device 12 or the mobile device 20 or both, the operation guide may be displayed along with a notification sound.

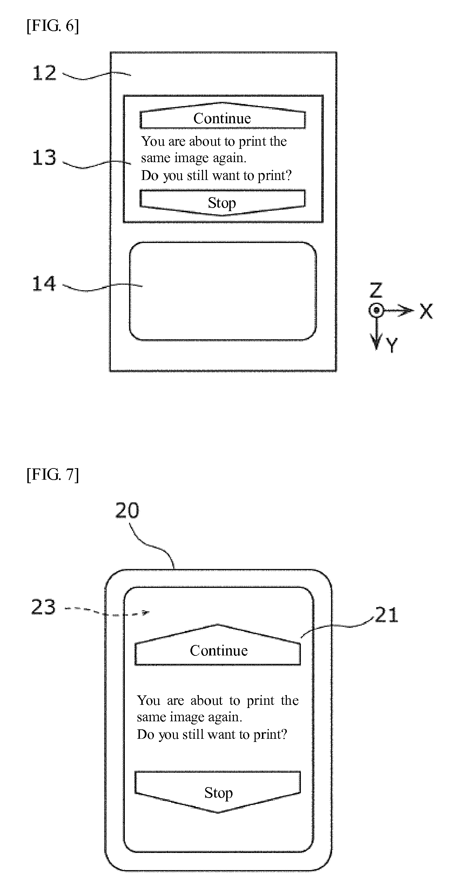

FIGS. 6, 7 are diagrams illustrating examples of operation guides displayed on the display 13 and the display 21, respectively, according to one or more embodiments. With the printing device 10, before starting printing of the image, the printing process of the image may be interrupted and such an operation guide may be displayed.

In the operation guides illustrated in FIGS. 6, 7, along with a message reciting "You are about to print the same image again", two instruction positions illustrated by oblong pentagons and instructions of "Continue" and "Stop" identified by each corresponding instruction position may be represented.

The operation guide, on the assumption that the user will first hold the mobile device 20 substantially directly above the receiver 14, may represent that "Continue" is identified in an instruction position at which the mobile device 20 is moved therefrom to the rear (-y direction) and "Stop" is identified in an instruction position at which the mobile device 20 is moved to the front (+y direction).

Here, the instruction position corresponding to "Continue" is the first instruction position described in FIG. 4, and "Continue" is associated with the difference a1>a2 between the strengths a1, a2 of the signals detected by the detectors 15, 16. Moreover, the instruction position corresponding to "Stop" is the second instruction position described in FIG. 4, and "Stop" is associated with the difference a1<a2 between the strengths of the signals.

The controller 17 may acquire the strengths a1, a2 of the signals detected by the detectors 15, 16 and identify the instruction associated with the difference between the strengths a1, a2 of the signals as the instruction of the user (S15). With the printing device 10, by the association described above, "Continue" may be identified when the difference between the strengths of the signals is a1>a2, and "Stop" may be identified when the difference between the strengths of the signals is a1<a2. Note that while details will not be repeated, the configuration according to one or more embodiments of the interface user device described above for identifying the instruction of the user with higher precision may be used here.

The controller 17 may execute the predetermined process by the option selected by the identified instruction (S16). With the printing device 10, when "Continue" is identified, the printing process that is interrupted resumes, and when "Stop" is identified, an ending process for cancelling the printing process of the image is performed.

In this manner, when the process involving the options is performed by the printing device 10, the user can select a desired option by disposing the mobile device 20 in the instruction position, that is, by merely changing the position over which the mobile device 20 is held. That is, the user can cause the printing device 10 to execute as a matter of course a process not involving options and even the process involving the options without tapping the screen of the mobile device 20 or moving the mobile device 20 from one hand to the other for tapping.

Therefore, the convenience of a user interface that acquires the instruction of the user by using wireless communication is enhanced. Moreover, such an effect can be obtained if the mobile device 20 has a function of wireless communication.

A similar effect can also be obtained by, for example, the mobile device detecting its own position and notifying this to the user interface device, but to do this, a position detection function obtained by, for example, an angular velocity sensor, an acceleration sensor, or the like needs to be provided in the mobile device. Therefore, the user interface device 12 described above also excels in being able to cooperate with many mobile devices, including low-cost or old mobile devices that do not have the position detection function.

According to one or more embodiments, an erroneous operation due to the slight shaking of the hand of the user can be prevented by identifying the instruction of the user when the difference between the strengths of the signals is greater than the third threshold.

In the following, embodiments of a configuration in which such an effect is more effectively exhibited will be described.

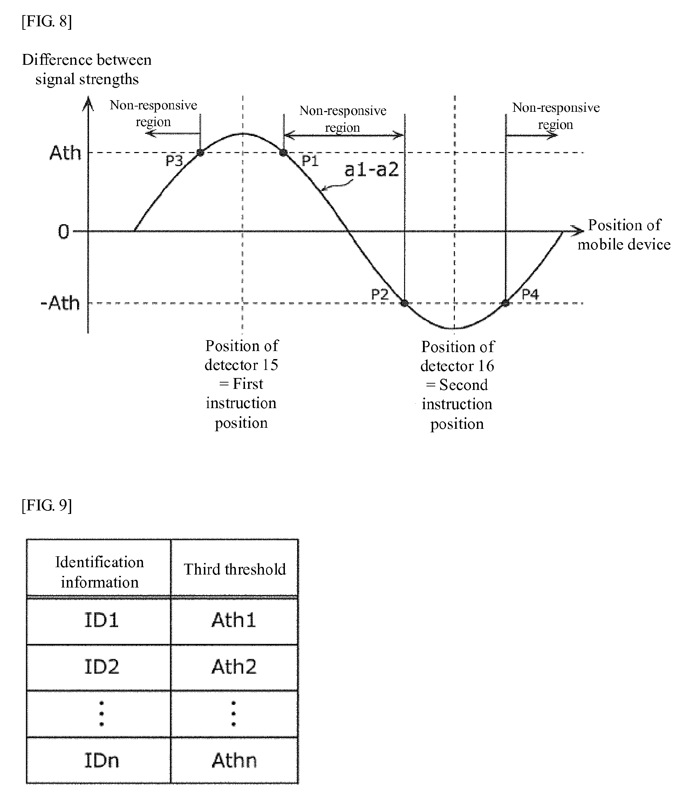

FIG. 8 is a diagram of an operation that identifies the instruction of the user when the size of the difference between the strengths of the signals is greater than the third threshold, in accordance with one or more embodiments. In FIG. 8, a difference a1-a2 of the strengths a1, a2 of the signals detected by the detectors 15, 16 according to the position of the mobile device 20 on the line passing over the detectors 15, 16 is illustrated. "Ath" is an example of the third threshold. A right side and a left side of a horizontal axis of the graph correspond respectively to the front and the rear when viewed from the user.

With a configuration that identifies the instruction of the user when the size |a1-a2| of the difference between the strengths of the signals is greater than the third threshold Ath, regions between a position P1 and a position P2, in front of a position P4, and to the rear of a position P3 become non-responsive regions where the instruction of the user is not identified. The effect described above is achieved by including in the non-responsive regions a vicinity of a position at which the difference between the strengths a1, a2 of the signals switches between becoming a1>a2 or a1<a2 depending on the slight shaking of the hand of the user.

However, the size |a1-a2| of the difference between the strengths of the signals can differ according to a shape of each mobile device 20, for example. Because of this, if the third threshold Ath is fixed to one value, there is a possibility that an excess or a deficiency of the non-responsive regions arises for each mobile device 20. With the non-responsive regions, there is a concern that the instruction of the user is unable to be identified if excessive and the erroneous operation is unable to be prevented if deficient.

Therefore, the controller 17, according to one or more embodiments, may retain third thresholds corresponding to each of a plurality of differing identification information of the mobile device 20, acquire the identification information of the mobile device 20 by wireless communication, and identify the instruction of the user when the size |a1-a2| of the difference between the strengths of the signals is greater than a third threshold corresponding to the acquired identification information.

FIG. 9 is a diagram illustrating an example of the third thresholds retained by the controller 17 according to one or more embodiments. As illustrated in FIG. 9, the controller 17 may retain one or more identification information ID1, ID2, ... , IDn and third thresholds Ath1, Ath2, ... , Athn corresponding to each identification information.

According to such a configuration, an effect of the erroneous operation is more effectively prevented because non-responsive regions suited to each mobile device 20 can be provided according to the third threshold associated with the identification information of the mobile device 20.

The third thresholds may be retained in advance by the controller 17 or may be newly retained by the controller 17. An exemplary process for the controller 17 to retain a new third threshold will be described below.

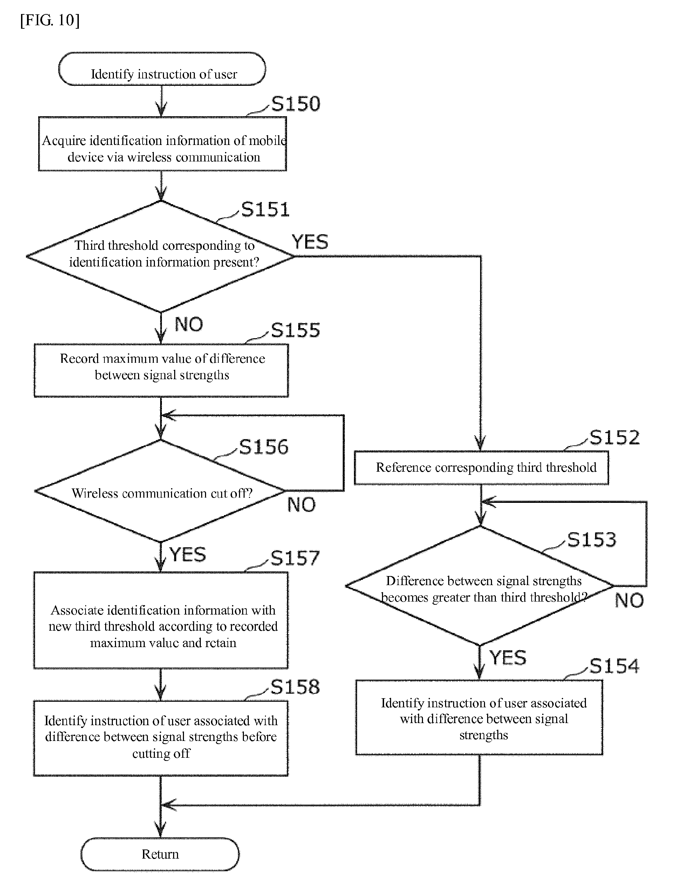

FIG. 10 is a flowchart illustrating an example of the process for the controller 17 to retain the new third threshold according to one or more embodiments. In the flowchart of FIG. 10, a portion that can be exchanged with step S15 illustrated in FIG. 5 is illustrated in detail.

The controller 17 may acquire the identification information of the mobile device 20 via wireless communication (S150). The controller 17 may acquire the identification information of the mobile device 20 for the first time at step S150 or may retain the identification information notified from the mobile device 20 when the connection of the wireless communication is established and use this identification information at step S150.

The controller 17 may determine whether the third threshold corresponding to the identification information is being retained.

If the corresponding third threshold is being retained (YES at S151), the third threshold is referenced (S152) so that if the size |a1-a2| of the difference between the strengths of the signals is greater than the third threshold (S153), an instruction associated with the difference a1>a2 or a1<a2 of the strengths of the signals is identified as the instruction of the user (S154).

Meanwhile, if the corresponding third threshold is not retained (NO at S151), the controller 17 may not identify the instruction of the user and begins recording a maximum value of the size |a1-a2| of the difference between the strengths of the signals (S155). Because the instruction is not identified, the user continues to move the mobile device 20 beyond the instruction position in a direction of a desired instruction position, and as a result, wireless communication is cut off. The controller 17 may continue to record the maximum value until wireless communication is cut off (S156). In this manner, the controller 17 may record the maximum value able to be obtained from the mobile device 20 in the size of the difference between the signal strengths.

The controller 17 may associate and retain the identification information of the mobile device 20 and the new third threshold according to the recorded maximum value (S157). The controller 17 may, for example, retain a value 80% of the recorded maximum value as the new third threshold.

The controller 17 may identify as the instruction of the user the instruction associated with the difference a1>a2 or a1<a2 of the strengths of the signals acquired before wireless communication is cut off (S158).

In this manner, the controller 17 may retain the new third threshold suited to the mobile device when identifying the instruction of the user through a mobile device connected for the first time. Then, non-responsive regions suited to the mobile device are set using the retained third threshold when identifying the instruction of the user a second and subsequent time through the mobile device. By this, the effect of preventing the erroneous operation when identifying the instruction of the user is more effectively exhibited.

The third threshold retained once may be renewed later by performing again the processes of steps S155 to S158 described above. For example, if the third threshold is renewed when a predetermined number of days has elapsed since the third threshold is retained or last renewed, influences such as change over time of the signal strengths are removed, and the instruction of the user can be constantly favorably identified.

According to one or more embodiments, the user interface device 12 may display on the display 21 of the mobile device 20 an operation guide such as illustrated in FIG. 7.

Because the user can hold the mobile device 20 over the receiver 14 in any orientation, an orientation of the mobile device 20 that is held over is generally unstable. Therefore, if the display guide is displayed on the display 21 in a fixed orientation, the instruction position represented in the operation guide on the display 21 and an actual instruction position do not necessarily match. Because of this, regardless of the user disposing the mobile device in the instruction position represented in the operation guide on the display 21, an erroneous operation such as an intended instruction not being identified or an unintended instruction being identified may occur.

In the following, an exemplary configuration for preventing such an erroneous operation will be described.

A user interface system according to one or more embodiments may be a system comprising a user interface device configured to cause the operation guide to be displayed in an appropriate orientation on the display of the mobile device and the mobile device. This exemplary configuration may include the user interface device 12 and the mobile device 20 described in examples above. Hereinbelow, elements already described will be suitably omitted, and the features of the user interface device 12 and the mobile device 20 will mainly be described.

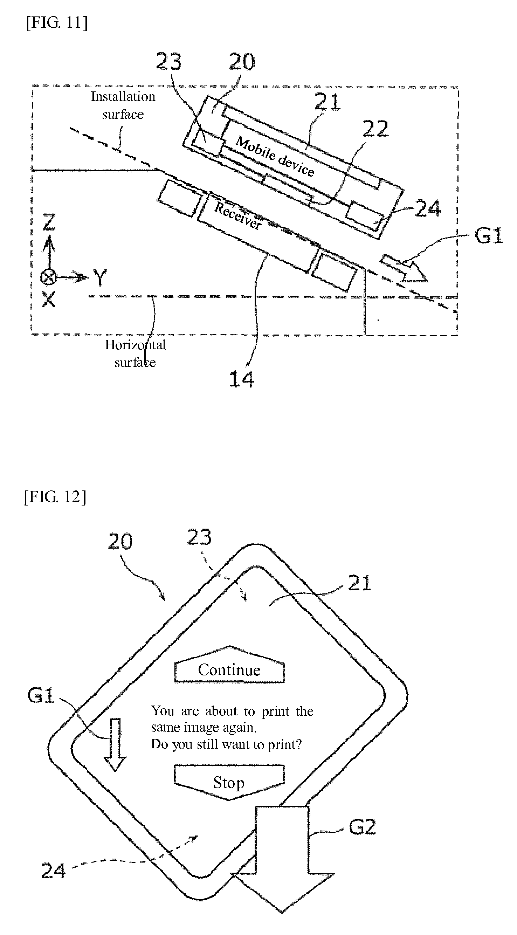

FIG. 11 is a side view illustrating an example of a configuration of the user interface device 12 and the mobile device 20 according to one or more embodiments.

The receiver 14 of the user interface device 12 is provided on an installation surface inclined relative to a horizontal surface. By this, the user unconsciously holds the mobile device 20 over the receiver 14 so that the mobile device 20 inclines in substantially the same direction as the installation surface. A direction of the incline of the installation surface is defined as a direction in which the installation surface forms the steepest downward gradient relative to the horizontal surface. The arrow G1 illustrated in FIG. 11 represents the direction of the incline of the installation surface. This direction is equivalent to a direction heading from the instruction position of "Continue" to the instruction position of "Stop" illustrated in the example described above.

A direction of an incline of the mobile device 20 is defined as a direction in which the mobile device 20 forms the steepest downward gradient relative to the horizontal surface. An inclination sensor 24 that detects the direction of the incline of the mobile device 20 is added to the mobile device 20. The inclination sensor 24 may be, for example, a gravity sensor that detects the direction of the incline based on a direction in which gravity is applied.

A controller 23 displays the operation guide on the display 21 in an orientation where the direction of the incline of the installation surface represented in the operation guide and the direction of the incline detected by the inclination sensor 24 match.

FIG. 12 is a diagram illustrating an example of the operation guide displayed on the display 21 in such an orientation according to one or more embodiments. The operation guide illustrated in FIG. 12 represents the same content as the operation guide of FIG. 7 in a different orientation. In FIG. 12, for the sake of description, the direction of the incline of the installation surface represented in the operation guide is represented by a virtual arrow G1 (that is, one that is not actually displayed). Moreover, the direction of the incline detected by the inclination sensor 24 is represented by the arrow G2.

In this manner, by providing the receiver 14 on the installation surface inclined from the horizontal surface, the mobile device 20 held over the receiver 14 inclines in substantially the same direction as the installation surface. Because of this, by displaying the operation guide on the display 21 in the orientation where the direction of the incline of the installation surface represented in the operation guide and the direction of the incline detected by the inclination sensor 24 match, the instruction position represented in the operation guide on the display 21 and the actual instruction position can be caused to match.

Embodiments of the user interface device, the printing device using the user interface device, and the user interface system comprising the user interface device and the mobile device are described above, but the present invention is not limited to these embodiments. Various modifications may be devised by combining the features of different embodiments.

For example, the user interface device of one or more embodiments of the present invention can comprise one receiver and one detector. In this case, the controller can also acquire the strength of the signal received by the receiver and the strength of the signal detected by the detector and identify an instruction associated with the difference between the strengths of the acquired signals as the instruction of the user.

Furthermore, the user interface device of one or more embodiments of the present invention can also comprise two detectors on the left and right of the receiver and identify the instruction of the user in the instruction positions provided on the left and right of the receiver. Moreover, the instruction of the user may be identified by disposing four detectors on the left, right, rear, and front of the receivers in instruction positions provided in eight directions, vertically, horizontally, and diagonally with respect to the receivers. With such a configuration, because a more complex selection of options becomes possible, a practical value increases.

Embodiments of the present invention can be widely used in application devices comprising a user interface device that acquires an instruction of a user by using wireless communication, such as a printing device.
Although the disclosure has been described with respect to only a limited number of embodiments, those skilled in the art, having benefit of this disclosure, will appreciate that various other embodiments may be devised. The scope of the invention should be limited only by the attached claims.

### [Description of the Reference Numerals]

- 10: Printing device
- 11: Printing unit
- 12: User interface device
- 13: Display
- 14: Receiver
- 15: Detector
- 16: Detector
- 17: Controller
- 20: Mobile device
- 21: Display
- 22: Transmitter
- 23: Controller
- 24: Inclination sensor

## Claims

1. A user interface device (12) for receiving a user instruction, comprising:
a receiver (14) configured to receive a signal by wireless communication from a mobile device (20);
one or more detectors (15, 16) disposed in predetermined positions with respect to the receiver (14) and configured to detect one or more strengths of the signal; and
a controller (17) configured to:
acquire a strength of the signal received by the receiver (14) and at least one of the strengths of the signal detected by the one or more detectors (15, 16), and
identify, as the user instruction, an instruction associated with a difference between the acquired strengths of the signal.

2. The user interface device (12) according to claim 1, wherein
once a connection of the wireless communication is established, the controller (17) is configured to identify the instruction by acquiring the strengths of the signal after a predetermined period of time that the mobile device (20) is held in a fixed position.

3. The user interface device (12) according to claim 1, wherein
once a connection of the wireless communication is established, the controller (17) is configured to identify the instruction by acquiring the strengths of the signal after a predetermined time period during which each of the strengths of the signal is greater than a first threshold and the difference between the strengths of the signal is equal to or less than a second threshold.

4. The user interface device (12) according to any of claims 1 to 3, wherein
the controller (17) is configured to identify the instruction when the difference between the strengths of the signal is greater than a third threshold.

5. The user interface device (12) according to claim 4, wherein
the controller (17) is configured to:
store the third threshold corresponding to each of a plurality of identification information,
acquire identification information of the mobile device (20) by the wireless communication; and
identify the instruction when the difference between the strengths of the signal is greater than the third threshold corresponding to the acquired identification information of the mobile device (20).

6. The user interface device (12) according to claim 5, wherein
the controller (17) is configured to:
record a maximum value of the difference between the strengths of the signal from when the connection of the wireless communication is established until the connection is disconnected,
calculate a new third threshold from the recorded maximum value, and
associate and store the identification information of the mobile device (20) acquired by the wireless communication with the new third threshold.

7. The user interface device (12) according to any of claims 1 to 6, further comprising a display (13), wherein
the controller (17) is configured to display on the display (13):
a plurality of instruction positions at which a characteristic difference arises for each of the strengths of the signal acquired when the mobile device (20) is disposed; and
instructions associated with the characteristic differences at each of the instruction positions.

8. The user interface device (12) according to any of claims 1 to 7, wherein
the receiver (14) is interposed between two of the detectors (15, 16), and
the controller (17) is configured to acquire the strengths of the signal detected by the two detectors (15, 16) and identify the instruction associated with the difference between the acquired two strengths of the signal.

9. The user interface device (12) according to any of claims 1 to 8, wherein
each of the detectors (15, 16) comprises a coil.

10. The user interface device (12) according to any of claims 1 to 9, wherein
the user interface device (12) is intended to be provided in a device configured to performs a process involving options,
the instruction is for selecting one of the options, and
the controller (17) is configured to:
start a process in the device after the connection of the wireless connection is established;
identify the instruction by acquiring the strengths of the signal; and
execute the process according to the selected option corresponding to the identified instruction.

11. A user interface system comprising:
a user interface device (12) according to any of claims 1 to 10 and
a mobile device (20), wherein
the receiver (14) of the user interface device (12) is provided on an installation surface inclined relative to a horizontal surface, and
wherein the mobile device (20) comprises:
a display (21);
an inclination sensor (24) configured to detect a direction of an incline of the mobile device (20); and
a controller (23) configured to display on the display (21) of the mobile device (20) an image representing a plurality of instruction positions at which a characteristic difference arises for each of the strengths of the signal acquired by the user interface device (12) when the mobile device (20) is disposed on the installation surface and instructions associated with the characteristic differences at each instruction position, the controller (23) being configured to display the image in an orientation at which a direction of an incline of the installation surface represented in the image and a direction of an incline detected by the inclination sensor (24) match.

12. A printing device (10) comprising a user interface device (12) according to any of claims 1 to 10, wherein
the controller (17) is configured to start a printing process in the printing device (10) after the connection of the wireless communication is established and afterward identify instructions relating to continuing and stopping printing by acquiring the strengths of the signal and continue or stop printing according to the identified instruction.

13. A method for receiving a user instruction with a user interface device (12), the method comprising:
receiving a signal by wireless communication from a mobile device (20);
detecting one or more strengths of the signal;
acquiring a strength of the received signal and at least one of the detected strengths of the signal; and
identifying, as the user instruction, an instruction associated with a difference between the acquired strengths of the signal.

14. The method according to claim 13, further comprising:
once a connection of the wireless communication is established, identifying the instruction by acquiring the strengths of the signal after a predetermined period of time that the mobile device (20) is held in a fixed position.

15. The method according to claim 13, further comprising:
once a connection of the wireless communication is established, identifying the instruction by further acquiring the strengths of the signal after a predetermined period of time during which each of the strengths of the signal is greater than a first threshold and the difference between the strengths of the signal is equal to or less than a second threshold.
